Europäisches Patentamt

(19) European Patent Office

Office européen des brevets

(11) Publication number: **0 202 322 B1**

(12) **EUROPEAN PATENT SPECIFICATION**

(45) Date of publication of patent specification:
08.05.91 Bulletin 91/19

(51) Int. Cl.⁵: **G02F 1/29,** G02F 1/01,
H01S 3/136

(21) Application number: 86900360.8

(22) Date of filing: 14.11.85

(86) International application number:
PCT/US85/02241

(87) International publication number:
WO 86/03601 19.06.86 Gazette 86/13

(54) VARIABLE LENS AND BIREFRINGENCE COMPENSATOR FOR CONTINUOUS OPERATION.

(30) Priority: 03.12.84 US 677452
25.03.85 US 715710

(43) Date of publication of application:
26.11.86 Bulletin 86/48

(45) Publication of the grant of the patent:
08.05.91 Bulletin 91/19

(84) Designated Contracting States:
BE CH DE FR GB IT LI NL SE

(56) References cited:
See also references of WO8603601

(73) Proprietor: Hughes Aircraft Company
7200 Hughes Terrace P.O. Box 45066
Los Angeles, California 90045-0066 (US)

(72) Inventor: KAHAN, Osher
4520 Huntley Avenue
Culver City, CA 90230 (US)
Inventor: GREGOR, Eduard
820 Las Lomas
Pacific Palisades, CA 90272 (US)

(74) Representative: Kuhnen, Wacker & Partner
Schneggstrasse 3-5 Postfach 1553
W-8050 Freising (DE)

## Description

The present invention relates to lasers and optical compensation of laser radiation. More specifically, this invention is concerned with means and methods for creating temperature gradients within a plurality of bodies of optical material for establishing radially dependent optical path length and polarization fields which can be exploited to continuously compensate for anomalies in laser rods.

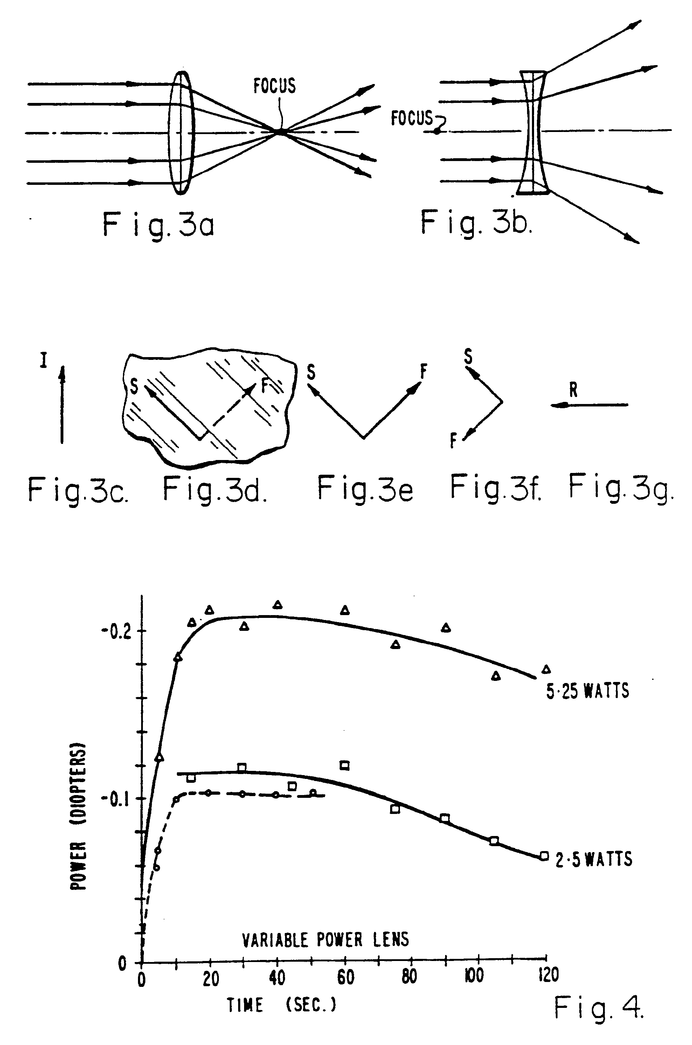

One of the most burdensome problems which confronts designers of communication and measuring systems which employ lasers is the phenomenon of beam divergence. Although lasers produce coherent light which is commonly preceived to be constituted of a multitude of perfectly parallel rays of electromagnetic radiation, these rays always spread to some extent. Excessive divergence of the beam occurs if the optical components comprising the resonator cause optical distortions. Various laser amplification media and systemic constraints cause distortion in laser rods. Typical repetitively pumped solid state laser rods, for example, tend to produce output radiation which diverges in proportion to the pumping power of the laser. An optical device which causes radiation to diverge exhibits the most significant property of a convex or positive lens, as depicted in Figure 3a.

If an incident beam of light composed of collimated or parallel rays is directed toward a positive lens of uniform and isotropic temperature and is aligned parallel to the optical axis of the lens, then the direction of each ray that issues from the exit side of the lens will depend upon the angle of its incidence relative to the surface normal on the face of the lens and upon the optical path length which the ray must traverse in order to travel across the lens. Each ray will be bent by an amount which is dependent upon its angle of incidence relative to the surface normal and its path length which, in turn, depends upon the index of refraction of the optical material from which the lens is made and the thickness of the lens which the ray traverses.

In the case of a repetitively pumped laser rod, the rod will be heated by an amount proportional to the input power the rod absorbs from the excitation mechanism. The heat in the rod is dissipated at its exterior surface. Gradually, perhaps over a period of ten seconds, the rod is transformed into a positive lens by this heating and cooling. This transformation takes place because the rod is not uniformly and isotropically homogeneous with respect to temperature. The temperature differences along any radius of the rod set up regions of different indices of refraction. A radial temperature gradient is created within the rod, and, since the refractive index is temperature dependent, a radial refractive index gradient is also established within the rod. This effectively creates a lens having a distribution of radially dependent optical path lengths which mimics that of a physically convex lens which is depicted in Figure 3a. The power of this transitory positive lens is proportional to the extent to which it is heated because the temperature determines the spatial variation of refraction within it. The temperature gradient generated in the rod is proportional to the heat flow and the refractive index parallels the temperature gradient. This dynamic lensing action of the rod, brought about by a temperature gradient, is responsible for the unwanted beam divergence.

When the output beam of a laser diverges in this way, the coherent radiation loses much of its effectiveness, since the energy delivered by the beam to a distant point depends on how much of the beam is concentrated on a targeted spot of limited area. Energy which is spread out over a much larger area than the cross-section of the original beam is less concentrated, and therefore less useful, in communications and measurement applications.

Various complex mechanical systems have been employed in previous attempts to solve this problem of rod lensing. One such system is a zoom lens which consists of a pair of short focal length lenses of opposite optical power. The spacing between the lenses can be adjusted to control the net optical power resulting from the use of the pair of lenses This arrangement maintains a constant beam divergence, but the exorbitant cost of the necessary precision lenses, mechanical races, direct current motor, and complicated control electronics makes this solution unattractive.

Simple static concave negative lenses have been used in the laser resonator cavity to compensate for the dynamic lensing action of the rod. The constant action of the static negative lens, however, proves detrimental to the operation of the laser until the time when the laser rod has been heated and has attained the exactly equivalent but-opposite optical power for which the simple fixed negative lens is designed to compensate. A further complication results from the use of variable repetition rates of the pulsed laser. One static concave negative lens can not cope with variable rates, since the best achievable compensation is for one particular, specified magnitude or extent of dynamic lensing caused by the heated laser rod.

Another problem concerning the performance of a solid state laser is the optical aberration of laser rod due to thermal birefringence in the laser rod which causes depolarization of the laser beam and reduces efficiency in polarized lasers. When a solid state rod is pumped with excitation radiation, a great portion of this stimulation energy is converted to heat in the rod. One of the effects of this rod heating is the depolarization of the laser beam by birefringence. Beam depolarization can reduce the potency of laser output and therefore poses a serious problem when lasers are used in situations which require high power output

In a solid state rod, heat resulting from flash-lamp excitation causes physical deformation of the rod. Since the rod material expands with temperature, a radial stress gradient is formed which produces radially dependent birefringence in the rod. Birefringence, also known as double refraction, is an optical phenomenon in which a material exhibits a different index of refraction for each of two polarization directions defined by the material. This double refraction is illustrated by the action of a birefringent crystal in Figures 3c-3g. In the course of the passage of light through it, a birefringent medium resolves the polarized beam into two component beams. Each beam is polarized along one of the unique directions, so that the beams traverse the material at different speeds. When the two beams recombine after leaving the material, they are no longer in phase with one another and the polarization state is changed.

Figures 3c-g schematically illustrate this birefringence phenomenon. In Figure 3c, vector I represents the polarization direction of a beam of incident light. When this beam I passes through a birefringent material, as is shown in cross-section in Figure 3d, the vector I is resolved into two components, S, shown in solid line, and F, shown in dashed line. Components S and F, which represent high and low refractive index polarizations, respectively, are shown after exiting the crystal in Figure 3e, traveling at different speeds. The S component now lags the F component as a result of the birefringent action (Figure 3f). When added vectorially, S and F combine to form the resultant vector R which has a new polarization direction (as shown in Figure 3g).

The heat in the laser rod creates depolarizing regions within it which vary in efficacy in accordance with each internal region's distance from the central axis of the rod. The different regions cause the rod as a whole to become birefringent because of variations in the indices of refraction of the disparately stressed portions of the rod. As was the case with the limitations of compensation of beam divergence by the action of a single, simple negative lens placed within the resonator cavity, such a lone optical element is equally ineffective to correct for depolarization caused by laser rod thermal stress birefringence.

Previously known methods of compensating for rod birefringence include the use of a polarization rotator used between a pair of rods operated at the same output power level. A lensing system is employed to align the beam so that the rods compensate for each other's birefringence. This system, however, requires the use of two rods in addition to pressure vessels which are extremely expensive and difficult to maintain in proper mechanical alignment.

A number of inventions noted in the disclosure statement filed in connection with this application employ devices which modify a beam of radiation using an externally controlled optical medium in order to alter various properties of the beam. U.S. Patent No. 3,735,046 – Zook, discloses apparatus which adjusts the wavefront shape of a light beam using beam-addressed optical memory means controlled by a varying electric field. Mitchell, et al., describe an optical device which exhibits temperature-dependent optical absorption properties in U.S. Patent No. 3,790,250. An apparatus devised by Drake in U.S. Patent No. 3,945,715 employs an electro-optical transducer in a large scale data storage system. Hon, et al., (U.S. Patent No. 4,019,159) use a feedback arrangement with a crystal of electro-optic material mounted in an oven to control the temperature and tune the electric field of a frequency doubling crystal. In U.S. Patent No. 4,117,399, Ono, et al., explain a method and apparatus for measuring electric current or voltage which utilizes an optical converter which includes a source of laser light, a polarizer, and a Faraday rotator. Huignard, et al., exploit the Kerr Effect by subjecting two astigmatic electro-optical elements to varying electric fields in U.S. Patent No. 4,124,273 in order to focus an incident beam of energy on an object which is changing its position rapidly A thermal-optical converter comprising a closed vessel containing an aqueous solution is disclosed by Tamada, et al., in U.S. Patent No. 4,169,661.

None of the preceding inventions solve the problem of the deleterious effects of beam divergence or depolarization produced by thermally induced birefringence in a solid state rod laser. Three of the inventions cited in the disclosure statement are more directly concerned with the problem of using an externally controlled optical medium to accomplish some compensation of aberrations in a beam of radiation. Kumada discloses apparatus comprising an electro-optical crystal used in conjunction with a power source which is used to impose a voltage that regulates the transmission of incident light through the crystal. This optical switch, which is described in U.S. Patent No. 3,838,906, restricts light transmission by altering the birefringent characteristics of the crystal. Kumada's invention is not directed to the problem of mitigating beam divergence or correcting unwanted depolarization in coherent light output. In United States Patent No. 3,780,296, Waksberg, et al., disclose apparatus for an electro-optical laser beam modulation system. This device requires a specially birefringent optical medium and employs analyzer and photodetector means for generating and processing an error signal in order to modify the characteristics of a laser beam. This device not only requires a medium which must exhibit particular birefringent behavior, but also necessitates the inclusion of complex electronic control and analysis equipment. U.S. Patent No. 3,892,469 – Lotspeich reveals an- apparatus which employs an array of cylindrical electrodes which are embedded in a solid body of crystalline material and are energized by a remote power supply in order to provide a device having a variable focal length. Lotspeich's device requires the precise and costly implantation of metal electrodes in a specialized compensation medium. Additionally, Lotspeich makes no attempt to confront the difficulties imposed by stress-related depolarization of the beam.

None of these prior devices provides an effective and inexpensive solution to the optical aberrations described above in detail which plague the operation and performance of high output, solid state lasers. Such a solution would satisfy a long felt need manifested by the current efforts of the laser and optics industry which continues to develop communications and measurement systems which require reliable, durable, and cost-effective high output lasers. The continued development and manufacture of such high power lasers has generated a concomitant demand for an invention which compensates for laser beam imperfections in a manner which does not create additional deleterious side-effects and which does not interfere with the performance and amplification of the laser itself.

The problem of unwanted beam divergence is overcome with a laser apparatus and a variable lens, respectively, as known from US-A-3 609 584. The compensating thermal lens is coupled to a heat exchange means. The material of the lens has a temperature dependent index of refraction, and accordingly by establishing a temperature gradient an index of refraction gradient is established providing a lensing effect opposite to the lensing effect inherent in laser radiation from solid-state laser rods. From US-A-3 662 281 an apparatus is known for compensation of stress induced birefringence caused by non-uniform heating of a laser rod. This compensation is accomplished by inserting a compensating material of similar physical properties to the laser rod and to the laser cavity and artificially inducing birefringence in the compensating material in a sense opposite to that taking place in the laser rod by heating the compensating material appropriately. Both apparatuses known from US-A-3 609 584 and US-A-3 662 281 are susceptible to overheating after some finite time of operation. After the temperature limits of the compensating material are reached the heating up for compensating the unwanted effects as well as the laser operation must be stopped in order to allow the optical material to cool. It is an object of the present invention to provide an apparatus and a method which allow uninterrupted laser operation with simultaneous correction of beam divergence and birefringence depolarization.

It is a further object of the invention to effectively diminish the above described optical aberrations in an inexpensive and reliable manner which employs a minimum of parts. Such avoidance of moving parts eliminates the constant calibration and eventual replacement of components which are susceptible to wear and friction.

These and other objects are solved by an apparatus as defined in claim 1, and with a method as defined in claim 13.

The present invention provides an efficacious, practical, cost-effective, and straightforward solution to the problems of beam divergence and birefringent depolarization. The present invention utilizes a pair of compensators comprised of two bodies of optical material which are thermally coupled to a pair of heat transfer means For establishing adjustable radial temperature gradients within the compensators. The compensator bodies are designed to reside within a laser resonator on either side of the laser rod without adversely affecting the laser tuning, although the invention could be adapted to operate outside of the laser cavity without a loss of performance. Heat is added to or extracted from the periphery of the compensator bodies in exact proportion to the extent of the heating of the laser rods.

The addition or extraction of heat from the compensator bodies establishes radial thermal gradients within them which are opposite to the gradients in the laser rod. In each of the laser rods, heat is dissipated at its periphery. In the compensators, heat is added at the periphery of the compensators. By selecting a material for the compensator bodies which has a temperature dependent index of refraction, the spatial variation of temperature within a body can be exploited to create a dynamic lens. By further selecting a material which develops a higher index of refraction when its temperature is increased, each compensator can be made to behave like a negative lens such as illustrated in Figure 3b, when the heat transfer means is activated and raises the temperature of a compensator body. By placing such a tandem compensator in proper alignment with the divergent output of a solid state laser rod, beam divergence can be reduced since the positive aspect of the laser rod will be canceled by the exactly opposite negative aspect of the dynamic lens formed by the tandem compensator. Furthermore, depolarization caused by laser rod birefringence can be similarly remedied since the thermal gradient within the dynamic lens is deliberately imposed to be in the opposite sense of the gradient within one of the laser rods. By selecting optical material which possesses a particular refractive index dependence upon temperature, this single device can simply and inexpensively extinguish a substantial portion of both sources of optical imperfection concurrently.

The present invention further solves the dilemma which results from the use of a single simple negative lens within the resonator cavity. The action of the twin compensators is always directly proportional and opposite to that of the stimulated laser rod. The pair of compensators is initially optically neutral. The optical power it subsequently assumes is automatically tailored to the laser rod. The lensing phenomenon produced by the present invention will always be precisely suited to accomplish a correction of whatever divergence or birefringence aberrations which would otherwise distort the laser output.

One of the most important features of the present invention is that it utilizes a plurality of coordinated variable lens and birefringence compensation means to provide for uninterrupted operation. This extremely valuable feature constitutes a major step forward in the laser technology art since it is critically important in utilizing the present invention with the vast number of possible advantageous applications which call for a continuous, as opposed to an intermittently operated laser.

In a preferred embodiment of the present invention dual polar heat removal means deployed at each of the two poles of each of the coordinated variable lens and birefringence composation means are used. This beneficial innovation further enhances the reliability, durability, and useful lifetime of the apparatus. In addition, the incorporation of the dual, polar, longitudinal heat removal means refines and implements the features of the original preferred embodiment of the invention described in the previous patent application by O. Rahan and E. Gregor and thereby makes the continuous operation capability described above practical so that the invention can be produced commercially for use over in wide range of laser environments.

One of the features of the present invention is the provision for heat removal means which extracts heat generated by the operation of the twin rod compensators. Heat is removed from the polar regions of the rods of optical material of each of the coordinated lens assemblies. This polar heat extraction creates longitudinal temperature gradients which do not alter the lens properties of the compensators.

It is an advantage that the apparatus of the present invention is suited to operate inside a laser rasonator and effectively functions over a wide range of temperatures which include operation ranges for military as well as commercial applications

It is a further advantage that an apparatus and a method are provided which effectively allow for continuous correcting of the unwanted effects of beam divergence and birefringence depolarisation in laser rods. It is still a further advantage of the present invention that the compensator apparatus is sufficiently versatile so that it functions when deployed on either side of the laser rod or even immediately outside the resonator.

Subclaims are directed to preferred embodiments of the present invention. An appreciation of other aims and objects along with a more complete and comprehensive understanding of the present invention may be achieved through the study of the following description of a preferred embodiment in addition to reference to the accompanying drawings.

## BRIEF DESCRIPTION OF THE DRAWINGS

FIG. 1 is a perspective view of a portion of one of the two compensators used in the preferred embodiment of the present invention which also reveals its cross-sectional structure.

FIG. 2 is an elevational, partial cut-away view of a portion of the invention taken along line 2-2 of FIG. 1.

FIGS. 3a, b, and 3c-3g are illustrative explanations of the action of a positive lens, a negative lens, and the property of birefringence respectively.

FIG. 4 is a linear plot of the optical power of the dynamic lens as a function of operation time.

FIG. 5 is a graph showing the effectiveness of the present invention as a compensator of birefringent depolarization.

FIG. 6 is a perspective side view of the preferred embodiment of the present invention depicting two aligned variable lens and birefringence assemblies incorporating dual, polar longitudinal heat removal means which provide for coordinated, continuous operation.

FIG. 7 is a transverse cross-sectional view of one of the assemblies shown in FIG. 6 taken along line 7-7.

FIG. 8 is a schematic diagram of the temperature sensor and trigger means which coordinate the function of the tandem arrangement shown in FIG. 6.

Fig 9 is a schematic diagram of an alternative embodiment of the trigger means shown in Fig. 8,

Fig. 10 is a graph showing the effectiveness of the present invention in the concentration of the output beam of a laser.

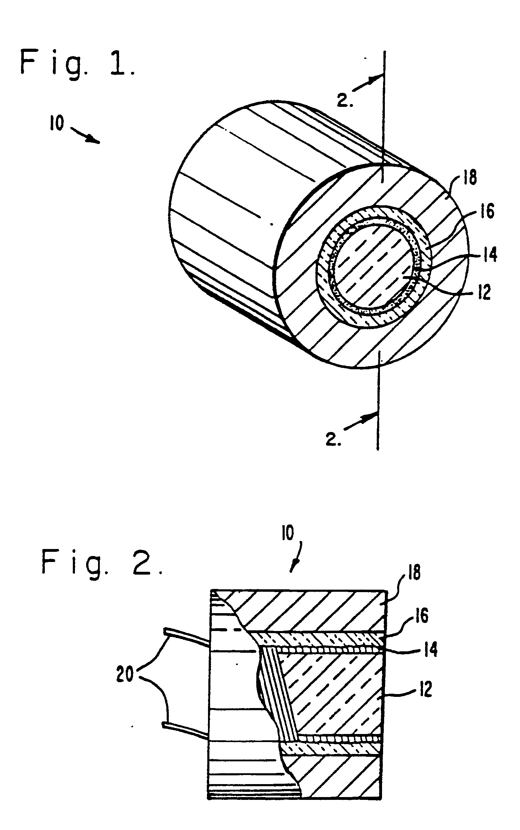

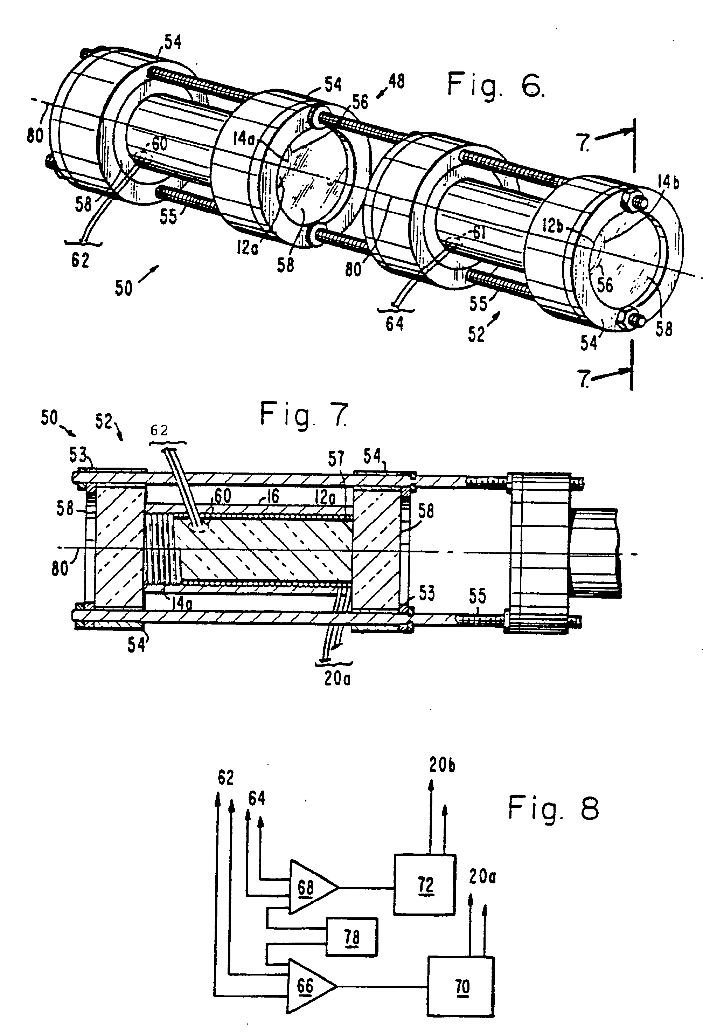

Figs. 1 and 2 depict a portion, i.e. the compensators, of the preferred embodiment of the present invention as described in further detail in conjunction with Fig. 6.

A single rod variable lens and birefringence compensator 10 includes one cylindrical body 12 of optical material surrounded by one heat exchange means 14 consisting of a coil of thin insulated wire which is wound around the full extant of body 12. The heat exchange means 14 is, in turn, enveloped by a layer of potting material 16 which has the property of being a poor thermal conductor. This insulating layer is disposed between a body 12 of optical material and a heat sink 18 which is employed to dissipate excess heat which builds up in body 12.

In FIG. 2, leads 20 are shown extending to the ends of the coiled wire of the heat exchange means.

Compensation body 12 may be chosen to be cylindrical or disc-shaped. Any generally alongated rod-like configuration may be employed which would enable the designer to impose some predetermined temperature gradient in order to exploit or alter the optical properties of the single rod compensator. A rod-like structure having an elliptical cross-section, for example, might be utilized to accomplish some task of optical correction if the circumstances required such a variation on the central innovative concept which comprises this invention. The length of the single rod compensation body affects the maximum operation interval of a single rod compensator. After a certain period of operation, excess heat builds up in a single rod compensator and adversely affects its correcting power because eventually the heat transfer means and body of optical material eventually reach thermal equilibrium. In a cylindrical rod, for example, a single,one half inch (1.25 cm) long rod can provide compensation for roughly one and one-half minutes. A single two inch (5 cm) long rod has a maximum operation interval of about eight minutes, at which time the sole compensator must be allowed to cool before it can be used again with the desired results. A relatively longer compensator body, however, requires less heat input per unit volume to achieve the same level of correction. The optical material must exhibit the property of a temperature dependent index of refraction in order to be effective in curing the defect of beam divergence. Similarly, if a compensator is envisioned to be used as a birefringence corrector, the optical material must expand when its temperature is elevated in order to form the appropriate stress field which remedies depolarization These two characteristics are physically independent since a compensator need not necessarily be employed to assuage both the divergence and depolarization conditions A material may, however, be selected which accomplishes both tasks simultaneously. Given these constraints, the designer of a compensator is at liberty to use a broad array of substances for the body of the compensator. Aside from the most likely choices of glass, plastic, or crystal, any material which displays the attributes delineated above may be selected for the task. Even a liquid or gaseous-phase compensation medium may be employed if it satisfies the design criteria explained above.

In designing a single rod compensator body, an important criterion to consider is the thermal conductivity of the optical material selected. A minimum heat input by the heat exchange means will maximize the operation interval before such a single rod compensator must be deactivated and allowed to cool. In order to minimize the amount of heat admitted to a compensator body, it is highly desirable to select a material in which a small change in temperature will produce a large change in the temperature gradient created in the compensator. Material which has a low thermal conductivity or diffusivity prevents the infused heat from migrating to the center of a compensator body too rapidly.

The heat exchange means may be fashioned out of a coil of thin, insulated wire commonly used in transformers or inductor coils. Such wire can be wound around a compensator body and spaced in any arrangement which will supply the desired degree of heat exchange. An alternative embodiment of the heat transfer mechanism would consist of a layer of resistive material deposited directly upon a compensator body. Such an enclosure or covering would be coupled to electrodes at its ends in order to pass an electrical current through it. Such material may generate heat when an electrical current is passed through it or may cool when energized, such as Peltier material. A further variation upon the inventive concept of the heat transfer means could be to use an external source of radiation, acoustic vibration, or heat exchange via an ambient medium of different temperature to accomplish the same goal of imposing an adjustable, substantially radial thermal gradient across and throughout a compensator body.

Each of the two compensators of the preferred embodiment of are constructed using a commonly available disc of optical material known commercially as a BK-7 -Boro-Silicate Grown 7 glass of Schott Glass Compagny Technologies, Jnc. This disc is approximately 0.4 inches (1 cm) in diameter and extends about 0.3 inches (.8 cm) from end to end. The BK-7 disc is wrapped with a standard version of insulated transformer wire. Electric current passed through the wire to heat the periphery of the disc imposes a quadratic temperature distribution within the disc which effectively forms a spherical lens having optical power proportional to the amount of heat dissipated at its exterior. The heat diffuses inwards gradually as the periphery of the lens continues to increase temperature. Once the body of optical material reaches thermal equilibrium with the heat transfer means, the single rod compensator is rendered ineffective and must be deactivated and allowed to cool. The BR-7, for example, sustains a constant optical power level for approximately 1.25 minutes for a constant level of input power. Increasing the input power as the optical power begins to taper off can extend the operation period, but the greater the input heat that is used per unit volume of compensation body, the shorter the duration of the lensing action since thermal equilibrium is attained more quickly.

The compensators may be tested using a Zygo interferometer. The lens formed behaves like a spherical lens free of wedge. Experimental testing, which employs a laser rod and a compensator placed between crossed polarizers, yields results which indicate that the compensator reduces depolarization substantially.

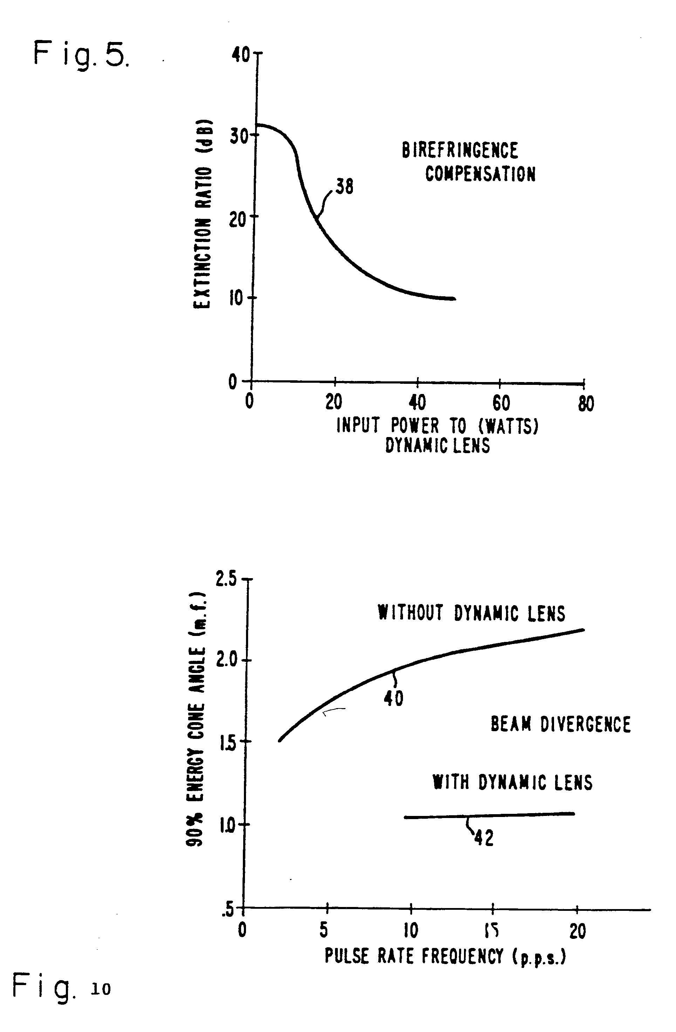

Actual experimental data attesting to the effectiveness of the compensators are presented in FIG. 4. Lens power in diopters is represented as a function of operating time of the compensator in seconds. FIG. 5 is a graph 38 illustrating the efficacy of the compensator in its birefringent depolarization correction mode. Graph 38 shows the degree of birefringent behavior exhibited by the compensator for a given input power in watts. The extinction ratio measured on the abscissa is a quantity measured in dB which indicates the degree of dimunition of intensity of radiation which is initially linearly polarized in a given direction, passed through a depolarizer, and then measured by a device which is sensitive only to components which are perpendicular to the initial polarization direction.

FIG. 10 is a graphic depiction of the single compensator's ability to correct for the aberration of beam divergence. The graph compares beam divergence for a solid state rod laser with and without the dynamic lensing action of the present invention. The divergence is quantified by measuring the angle of deviation from the optical axis of the laser beam which, if rotated about that axis, would define a cone which encloses 90% of the beam's energy. A relatively smaller angle of deviation, which is marked out in milliradians on the y-axis, indicates a tighter, less divergent, and more desirable laser beam output. The 90% energy cone angle is plotted against a wide range of frequencies of laser pulses (P.r.f. is an abbreviation for pulse rate frequency, measured in p.p.s., (pulses per second)). The upper curve 40 in FIG. shows the 901 energy cone angle exceeding 1.5 milliradians and breaching 2.0 milliradians without the use of the dynamic lens compensator. The lower curve 42 shows results obtained with the compensator. A comparison of the two curves reveals that the use of the compensator brought about improvements ranging from 1/3 to 1/2 less divergence in the laser beam.

Actual experimental data attesting to the effectiveness of the compensators are presented in FIG. 4. Lens power in diopters is represented as a function of operating time of the compensator in seconds. FIG. 5 is a graph 38 illustrating the efficacy of the compensator in its birefringent depolarization correction mode. Graph 38 shows the degree of birefringent behavior exhibited by the compensator for a given input power in watts. The extinction ratio measured on the abscissa is a quantity measured in dB which indicates the degree of dimunution of intensity of radiation which is initially linearly polarized in a given direction, passed through a depolarizer, and then measured by a device which is sensitive only to components which are perpendicular to the initial polarization direction.

Fig. 6 showing a preferred embodiment of the present invention depicts a tandem, concentric arrangement 48 of identical variable lens and birefringence compensators as described above which, for purposes of illustration, have been labelled 50 and 52 in FIG. 6. Assemblies 50 and 52 are mechanically joined by connector bolts 55. Both bodies of optical material 12 are rod-shaped and are in optical alignment, i.e., are coaxial with longitudinal axis 80. Each of the twin assemblies 50 and 52 comprises a rod 12A, 12B surrounded by a heat exchange means 14A, 14B consisting of a coil of thin insulated wire. As described above, heat exhange means 14A, 14B may also comprise a sleeve or deposit of resistive material connected to leads 20A, 20B at both ends. Peltier material, which cools when an electrical current passes through it, may also be employed. Heat exchange means 14A, 14B is enclosed within a layer of potting material 16 which is a poor conductor of heat. The potting material 16 covers only the cylindrical surface of each rod 12A, 12B ; as opposed to either of each rod's circular end surfaces.

This selective deployment of thermal insulation blocks the radiation of heat away from each rod 12A, 12B in radial directions and forces heat to migrate to the circular end surfaces of each rod.

Each assembly 50 and 52 includes a pair of annular aluminum heat sinks 54 which are joined by heat sink connector bolts 55. Each aluminum heat sink 54 encircles a disc 58 of optically transparent aluminum oxide, which is commonly called sapphire. A good heat conducting boundary between the outer surface of each sapphire disc 58 and its respective, adjoining inner wall of aluminum heat sink 54 is formed by spring-loading each aluminum ring. A small cut (not shown) is made through each ring which enables each ring of aluminum 54, which has a slightly smaller interior diameter than the diameter of the sapphire discs 58, to be spread apart and fitted tightly over a disc 58. Aluminum is employed in the preferred embodiment of the invention because it is a very good conductor of heat and is relatively light weight and inexpensive. Other materials that are well suited for use as heat sink material may be utilized as well. The heat sink may also be fashioned as a solid, continuous sleeve of material which encloses each entire variable lens and birefringence compensator 50, 52. Although FIG. 6 shows heat sinks 54 having smooth outer surfaces, the heat transferring capacity of these aluminum rings may be enhanced by increasing their surface area. The heat sinks can be formed with radial fins (not shown), so that larger amounts of heat can be exchanged from the heated rod 12A, 12B to the ambient environment.

The sapphire discs 58 are very good thermal conductors and draw heat out from the rods 12 transversely along axis 80. The heat from the cylindrical compensators is extracted through the faces 56 of the sapphire discs 58 which abut the ends of the rod. In order to prevent each rod 12A, 12B from slipping out of optical alignment, a bevelled portion 57 is formed at each end of each rod 12A, 12B as shown in FIG. 7. A small ring of adhesive 59 is deposited along each bevelled surface 57 to bond each rod 12A, 12B to a pair of sapphire discs 58.

The temperature of the cylindrical surface of each rod 12A, 12B is sensed by thermocouples 60 and 61. These thermocouples are embedded in the surface of each rod 12A, 12B below the layers formed by heat exchange means 14A, 14B and potting 16. Although the present invention utilizes imbedded thermocouples as temperature sensing means, many other techniques which are well known in the art may be employed to detect the heat at the cylindrical boundaries of the rods 12.

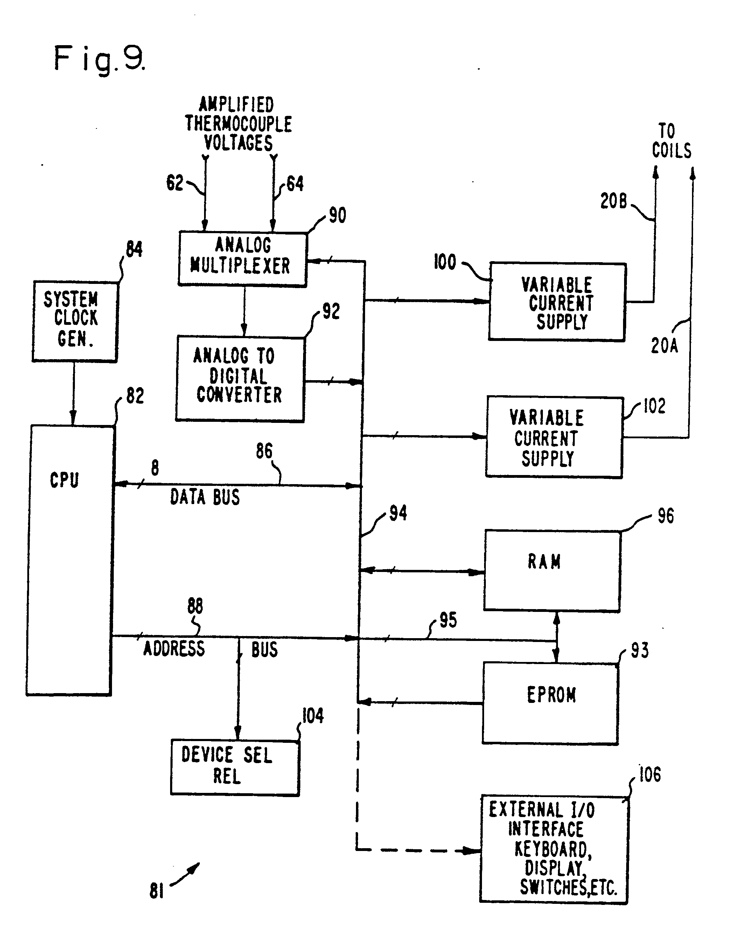

Each thermocouple 60 and 61 has a pair of leads 62 and 64 which convey an electrical signal from each thermocouple junction. The signal generated at a thermocouple junction corresponds to the temperature at each junction. FIG. 8 shows leads 62 and 64 connected to a pair of control circuits 66 and 68. Each control circuit 66 and 68 is linked to sequencing circuit 78. The outputs from control circuits 66 and 68 are fed to heat exchange means power supplies 70 and 72. Power supplies 70 and 72 are connected to leads 20A and 20B which convey power to the respective heat exchange means 14A and 14B of assemblies 50 and 52.

Control circuits 66 and 68 and sequencing circuit 78 function in combination as a trigger means which coordinates the alternating action of rods 12A and 12B within twin assemblies 50 and 52. Sequencing circuit 78 senses the status of both control circuits 66, 68 and supplies a high level switching signal to one of the control circuits and a low level switching signal to the other control circuit at all times. When the sequencing circuit is toggled by a signal sent to it from one of the control circuits, the high and low switching signals are reversed. In other words, when the sequencing circuit 78 is toggled, the control circuit which had been receiving a high switching signal then receives a low switching signal and vice versa.

Thermocouples 60 and 61 develop voltages that are sent along leads 62 and 64 to the control circuits 66 and 68 which, in turn, amplify the signals and compare them to a stored reference value. If an input thermocouple voltage is equal to the reference value, sequencing circuit 78 is toggled and sends a low or zero signal back to the control circuit which made the comparison. This low signal causes the receiving control circuit to turn off its respective heat exchange means power supply 70 and 72. When a low signal is sent to one of the two control circuits 66 or 68, a high signal is simultaneously sent to the other control circuit, which then causes the power supply that is connected to it to send an electrical current to its heat exchange winding 14A or 14B.

When the present invention is initially energized, both thermocouples 60, 61 sense temperatures which are below the reference value. The reference value is a predetermined temperature which is programmed into a memory device within control circuits 66, 68 and represents the maximum operating temperature of the rods 12A, 12B. The control circuits each include an amplifier which processes the input voltages from the thermocouples, as well as an and gate or its equivalent which carries out the comparison between an input and the reference value. Only one of the two control circuits 66 and 68 receive a high switching signal from the sequencing circuit at any given time. The control circuit which receives the high switching signal triggers the power supply 70 or 72 to which it is connected.

For purposes of this explanation, it may be presumed that control circuit 66 receives the high switching signal and control circuit 68 receives the low switching signal when the present invention is turned on. Heat exchange means 14A then receives electrical current from power supply 70, and rod 12A within winding 14A heats up and commences its variable lensing and birefringence compensation action. At the outset of the operation of the pair of variable lens and birefringence compensators, only assembly 50 is activated, since sequencing circuit 78 sends a high switching signal to only one of the two assemblies 50, 52. When the cylindrical surface of rod 12A reaches the reference value, control circuit 66 sends a signal to sequencing circuit 78 which toggles the sequencing circuit. Control circuit 66 then receives a low switching signal which causes control circuit 66 to turn off power supply 70. Leads 20A then cease supplying winding 14A with electrical current.

Rod 12A then begins to cool, since its source of heat has been turned off. Rod 12B simultaneously begins to heat up, since winding 14B is energized when sequencing circuit 78 toggles and control circuit 68 activates power supply 72.

When rod 12B reaches its maximum operating temperature, control circuit 68 senses that condition and toggles sequencing circuit 78 once more to begin the cycle again. This cycle continues as each rod takes over the variable lensing and birefringence compensation tasks in turn. The alternation of the duty cycles of the rods 12A and 12B enables the present invention to operate continuously. Minor modifications to the control and sequencing circuits can refine the timing of the switching between the two assemblies 50 and 52 in order to assure a smooth transition between the action of the pair. For example, the cooperation of the pair is enhanced if the rod which is inactive begins heating slowly as the active rod approaches the maximum temperature. The control circuits, sequencing circuit, and power supplies are constructed from conventional, off-the-shelf components. The designs and operation of the circuits described above are well known to persons of ordinary skill in the electronics art.

FIG. 9 further discloses means by which the action of the tandem assemblies 50 and 52 can be coordinated. The control mechanism described above can be substantially incorporated on a single, integrated circuit chip. This alternative embodiment of trigger means 66, 68 ; sequencing circuit 78 ; and power supplies 70, 72 is depicted schematically as an integrated circuit 81.

A central processing unit or CPU 82 is shown connected by data bus 86 and address bus 88 to main bus 94 and a plurality of integrated devices by circuit pathways 95. The CPU is a common, commerically available device which is referred to in the electronics field as a 6502 CPU. CPU 82 is connected to a system clock generator 84 which develops a regulating series of pulses for the CPU. Signals from thermocouples 60 and 61 are introduced to the integrated circuit 81 through connectors 62 and 64 into an analog multiplexer 90. The multiplexer 90 identifies and segregates the two different signals by sampling the analog voltages at 62 and 64 only at regular, predetermined intervals which are defined by system clock generator 84. An analog to digital converter 92 converts the analog voltages at 62 and 64 which are produced at the thermocouple junctions into digital values.

These digital values are stored by the CPU 82 in an erasable, programmable memory or EPROM 98. The address in the EPROM 98 at which any particular digital value is stored is selected by the device select decoder 104, which works in cooperation with the CPU 82 and enables the CPU to keep track of where information is stored. Once a digital value which represents a thermocouple temperature is stored in the EPROM 98, the CPU compares it to another digital value stored in the EPROM which represents the maximum operational temperature of the rods 12A, 12B within the tandem assemblies 50, 52. This process of comparison is repeated many times each second until the CPU senses a condition of equivalence between an input from one of the thermocouples and the pre-programmed value stored in the EPROM. Once the CPU determines that either of the rods 12A, 12B has equaled or exceeded the limit, the CPU sends a signal to the device select decoder 104. The decoder 104 then provides the CPU which an address in random access memory or RAM 96 which contains information that instructs the CPU to alter the supply of power to coils 14A and 14B in order to correct the overheating condition. Power for the coils 14A, 14B in supplied by variable current supplies 100, 102 which are connected to main bus 94 and winding leads 20A, 20B. RAM 96 contains information which is read and used by the CPU to switch off the overheating rod 12A or 12B slowly while switching on the other rod immediately in order to ensure a smooth transistion of variable lensing and birefringent compensation action. This cycle of snitching the assemblies 50 and 52 on and off continues sequentially as described above to enable the present invention to operate continuously. An external input/output interface 106 which includes a keyboard, a display, and various switches may be coupled to main bus 94 as a permanent fixture or as a temporary adjustment means for controlling the operation of the integrated circuit or for reprogramming and resetting purposes.

All of the devices described above that are shown in FIG. 9 are conventional circuit elements which are commonly employed in these types of designs by persons ordinarily skilled in the electronics arts.

## Claims

1. Apparatus for compensating the positive thermal birefringence effect and the thermal birefringence effect of a solid state laser comprising :
   at least two optically aligned cylindrical bodies (12a, 12b) each having first and second polar surfaces ;
   said bodies (12a, 12b) consisting of optical material having a temperature dependent index of refraction and a predetermined coefficient of expansion such that said material expands when said material's temperature increases for creating an adjustable radial stress gradient within said body to thereby simultaneously control birefringence effects and thermal lensing effects in said bodies (12a, 12b) ;
   heating means (14a, 14b) around the cylinder surface of said bodies (12a, 12b) for providing a radial temperature gradient in said bodies ;
   heat removal means (54, 58) thermally coupled to said polar surfaces of said bodies (12a, 12b) ;
   heat insulating means (16) for limiting transport of heat from said bodies (12a, 12b) from other than those regions enclosed by said heat removal means (54, 58), temperature sensing means (60, 61) for determining the temperature of the surface of said bodies (12a, 12b),
   trigger means (66, 68, 70, 72, 78 ; 81) for supplying power to the heating means (14a, 14b), for switching off the power for the one heating means (14a or 14b) if the associated temperature sensing means (60) indicates that a predetermined surface temperature is reached, and for switching on the power of another one of the heating means (14b or 14a) so that said bodies are alternately heated up.

2. Apparatus as claimed in claim 1, wherein a pair of optically aligned cylindrical bodies (12a, 12b) is provided.

3. Apparatus as claimed in claim 1 or 2, wherein said heating means (14a, 14b) comprises a coil of metal wire wound around the exterior surface of each of said cylindrical bodies (12a, 12b) of optical material, said wire transmitting heat to each of said bodies (12a, 12b) when electrical energy is applied to said coil.

4. Apparatus as claimed in claims 1 or 2, wherein said heating means (14a, 14b) comprises a sleeve of electrically conductive material placed in communication with each of said bodies (12a, 12b) of optical material.

5. Apparatus as claimed in claim 1 or 2, wherein said heating means (14a, 14b) and said heat removal means (54, 58) comprise Peltier material placed around the exterior surface of each of said bodies (12a, 12b) of optical material, and in which said Peltier material changes the temperatures of each of said bodies (12a, 12b) of optical material when an electrical current is passed through said Peltier material.

6. Apparatus according to at least one of the preceding claims, wherein said optical material is selected from the group consisting of glass, plastic and crystal.

7. Apparatus as claimed in claim 1 or 2 in which said heat removal means (54, 58) comprises :

at least one substantially annular heat dissipating member (54, 58) composed of a material which is a good conductor of heat ; and
in which at least one of said members is coupled to at least one of said polar surfaces of each of said bodies of optical material (12a, 12b).

8. Apparatus as claimed in claim 7 in which said substantially annular heat dissipating member (58) is made of aluminum oxide.

9. Apparatus as claimed in claim 1 or 2 in which said heat removal means (54, 58) comprises :

a pair of inner, substantially cylindrical heat dissipating layers (58) composed - of aluminum oxide ;
in which each of said inner layers has an exterior circumferential surface ;
a pair of outer, generally cylindrical heat dissipating layers (54) composed of aluminum ;
in which each of said inner layers substantially encloses both of said polar surfaces of each of said bodies of optical material (12a, 12b) ; and
in which each of said outer layers is coupled to said circumferential surface of one of said inner layers.

10. Apparatus as claimed in claim 1 or 2 in which said temperature sensing means comprises :

a plurality of thermocouples (60, 61) ;
wherein every individual body of optical material (12a, 12b) is coupled to at least one of said plurality of thermocouples (60, 61), generally at the exterior surface of said body of optical material.

11. Apparatus as claimed in claim 1 or 2 in which said trigger means (66, 68, 70, 71, 78) comprises :

first and second comparator means (66, 68), wherein each comparator means is coupled to one of said temperature sensing means (60, 61) and the heat exchange means (14a, 14b) which is coupled to one of said bodies of optical material (12a, 12b),

in which each comparator means (66, 68) compares a reference temperature value to an input received from its respective temperature sensing means to which it is coupled,
in which said first and second comparator means (66, 68) are coupled by linking means (78) so that they alternately switch their respective heat exchange means (14a, 14b) on sequentially,
and in which each comparator means (66, 68) switches its respective heat exchange means off when the temperature of its said, respective temperature sensing means (60) is equal to said reference temperature.

12. Apparatus as claimed in claim 1 or 2 in which said trigger means (66, 68, 70, 72, 78) comprises an integrated circuit for coordinating and controlling the sequential operation of said continuous operation variable lens and birefringence compensation apparatus.

13. Method for compensating the positive thermal lensing effect and the thermal birefringence effect of a solid state laser comprising the steps of :

positioning in the radiation of the laser at least two optically aligned cylindrical bodies (12a, 12b) each having first and second polar surfaces ;
said bodies (12a, 12b) consisting of optical material having a temperature dependent index of refraction and a predetermined coefficient of expansion such that said material expands when said material's temperature increases for creating an adjustable radial stress gradient within said body to thereby simultaneously control birefringence effects and thermal lensing effects in said bodies (12a, 12b) ;
heating said bodies by heating means (14a, 14b) positioned around the cylinder surface of said bodies (12a, 12b) for providing a radial temperature gradient in said bodies ;
removing heat by heat removal means (54, 58) thermally coupled to said polar surfaces of said bodies (12a, 12b) ;
limiting transport of heat from said bodies (12a, 12b) from other than those regions enclosed by said heat removal means (54, 58) by heat insulating means (16) ;
determining the temperature of the surface of said bodies (12a, 12b) by temperature sensing means (60, 61) ;
using trigger means (66, 68, 70, 72, 78 ; 81) for supplying power to the heating means (14a, 14b), for switiching off the power for the one heating means (14a or 14b) if the associated temperature sensing means (60) indicates that a predetermined surface temperature is reached, and for switching on the power of another one of the heating means (14b or 14a) so that said bodies are alternately heated up.

**Ansprüche**

1. Vorrichtung zum Kompensieren eines positiven thermischen Linseneffekts und der thermischen Doppelbrechung in einem Festkörperlaser mit :
    wenigstens zwei optisch ausgerichteten zylindrischen Körpern (12a, 12b), die jeweils erste und zweite Polarflächen aufweisen ;
    wobei die Körper (12a, 12b) aus einem optischen Material bestehen, das einen temperaturabhängigen Brechungsindex und einen vorbestimmten Ausdehnungskoeffizienten hat, so daß das Material sich ausdehnt, wenn die Temperatur des Materials ansteigt, um in dem Körper einen anpaßbaren radialen Streßgradienten zu schaffen, wodurch gleichzeitig die Doppelbrechung und der thermische Linseneffekt in den Körpern (12a, 12b) gesteuert wird ;
    Heizvorrichtungen (14a, 14b), die die Zylinderflächen der Körper (12a, 12b) umgeben, um einen radialen Temperaturgradienten in den Körpern bereitzustellen ;
    Wärmeabfuhrvorrichtungen (54, 58), die thermisch mit den Polarflächen der Körper (12a, 12b) gekoppelt sind ;
    Isolierungsvorrichtungen (16) zum Begrenzen des Wärmetransports von den Körpern (12a, 12b) aus Regionen, die nicht von den Wärmeabfuhrvorrichtungen (54, 58) umschlossen sind,
    einer Temperatur-Erfassungsvorrichtung (60, 61) zum Bestimmen der Oberflächentemperatur der Körper (12a, 12b),
    einer Steuereinrichtung (66, 68, 70, 72, 78 ; 81) zur Zuführung von Energie zu den Heizvorrichtungen (14a, 14b), zum Abschalten der Energie für die eine Heizvorrichtung (14a oder 14b), falls die zugehörige Temperatur-Erfassungsvorrichtung (60) anzeigt, daß eine vorbestimmte Oberflächentemperatur erreicht ist, und zum Einschalten der Energiezufuhr zu der anderen Heizvorrichtung (14b oder 14a), so daß die Körper abwechselnd aufgeheizt werden ;

2. Vorrichtung nach Anspruch 1, wobei ein Paar von optisch ausgerichteten zylindrischen Körpern (12a, 12b) vorgesehen ist.

3. Vorrichtung nach Anspruch 1 oder 2, wobei die Heizvorrichtungen (14a, 14b) eine Spule aus Metalldraht umfassen, der um die Außenfläche jeder der zylindrischen Körper (12a, 12b) aus optischem Material gewunden ist, wobei der Draht Wärme zu jedem der Körper (12a, 12b) überträgt, wenn der Spule elektrische Energie zugeführt wird.

4. Vorrichtung nach Anspruch 1 oder 2, wobei die Heizvorrichtungen (14a, 14b) eine Hülle aus elektrisch leitendem Material umfaßen, das in Kontakt mit jedem der Körper (12a, 12b) aus optischen Material angeordnet ist.

5. Vorrichtung nach Anspruch 1 oder 2, wobei die Heizvorrichtungen (14a, 14b) und die Wärmeabfuhrvorrichtungen (54, 58) Peltier-Material aufweisen, das auf die Außenfläche jedes der Körper (12a, 12b) aus optischem Material aufgebracht ist, und wobei das Peltier-Material die Temperatur jedes der beiden Körper (12a, 12b) aus optischem Material ändert, wenn elektrischer Strom durch das Peltier-Material geschickt wird.

6. Vorrichtung nach wenigstens einem der vorhergehenden Ansprüche, wobei das optische Material aus der Gruppe bestehend aus Glas, Plastik und Kristall ausgewählt ist.

7. Vorrichtung nach Anspruch 1 oder 2, wobei die Wärmeabfuhrvorrichtungen (54, 58) aufweisen :
    wenigstens ein im wesentlichen schlauchförmiges Wärmedissipationsteil (54, 58), das aus einem Material zusammengesetzt ist, das ein guter Wärmeleiter ist ; und
    wobei wenigstens eines der Teile mit wenigstens einer der Polarflächen jedes der Körper aus optischem Material (12a, 12b) gekoppelt ist.

8. Vorrichtung nach Anspruch 7, wobei das im wesentlichen schlauchförmige Wärmedissipationsteil (58) aus Aluminiumoxid besteht.

9. Vorrichtung nach Anspruch 1 oder 2, wobei die Wärmeabfuhr-Vorrichtungen (54, 58) aufweisen :
    ein Paar innerer, im wesentlichen zylindrischer Wärmedissipationsschichten (58), die aus Aluminiumoxid zusammengesetzt sind ;
    wobei jede dieser inneren Schichten eine äußere Umfangsfläche aufweist ;
    ein Paar äußerer im allgemeinen zylindrischer Wärmedissipationsschichten (54), die aus Aluminium zusammengesetzt sind ;
    wobei jede dieser inneren Schichten im wesentlichen beide Polarflächen jedes der Körper aus optischen Material (12a, 12b) umschließt ; und
    wobei jede der äußeren Schichten mit der Umfangsfläche einer der inneren Schichten gekoppelt ist.

10. Vorrichtung nach Anspruch 1 oder 2, wobei die Temperatur-Erfassungsvorrichtung aufweist :
    eine Mehrzahl von Thermoelementen (60, 61) ;
    wobei jeder einzelne Körper aus optischem Material (12a, 12b) mit wenigstens einem der Thermoelemente (60, 61) gekoppelt ist, im allgemeinen mit seiner Außenfläche.

11. Vorrichtung nach Anspruch 1 oder 2, wobei die Steuereinrichtung (66, 68, 70, 72, 78) aufweist :
    erste und zweite Vergleichseinrichtungen (66, 68), wobei jede Vergleichseinrichtung mit einer der Temperatur-Erfassungsvorrichtungen (60, 61) und den Wärmeaustausch-Einrichtungen (14a, 14b) gekoppelt ist, wobei die letzten mit einem der Körper aus optischem Material (12a, 12b) gekoppelt sind,
    wobei jede der Vergleichseinrichtungen (66, 68) Referenztemperaturwerte mit einem Eingangswert von der zugehörigen Temperatur-Erfassungsvorrichtung vergleicht, mit der sie gekoppelt sind,

wobei die erste und zweite Vergleichseinrichtung (66, 68) durch eine Verbindungseinrichtung (78) gekoppelt sind, so daß sie die zugehörigen Wärmeaustausch-Einrichtungen (14a, 14b) alternativ und aufeinanderfolgend einschalten, und

wobei die Vergleichseinrichtungen (66, 68) die zugehörigen Wärmetausch-Einrichtungen ausschalten, wenn die Temperatur der zugehörigen Temperatur-Erfassungsvorrichtung (60) gleich der Referenztemperatur ist.

12. Vorrichtung nach Anspruch 1 oder 2, wobei die Steuereinrichtung (66, 68, 70, 72, 78) einen integrierten Schaltkreis zum Koordinieren und Steuern der sequentiellen Operationen kontinuierlich arbeitenden Vorrichtung für eine variable Linse und zum Kompensieren von Doppelbrechung umfaßt.

13. Verfahren zum Kompensieren des positiven thermischen Linseneffekts und der thermischen Doppelbrechung eines Festkörperlasers mit den Verfahrensschritten :

Positionieren von wenigstens zwei optisch ausgerichteten zylindrischen Körpern (12a, 12b) in der Laserstrahlung, wobei die zylindrischen Körper jeweils eine erste und eine zweite Polarfläche aufweisen ;

wobei die Körper (12a, 12b) aus einem optischen Material mit einem temperaturabhängigen Brechungsindex und einem vorbestimmten Ausdehnungskoeffizienten bestehen, so daß sich das Material ausdehnt, wenn die Temperatur des Materials ansteigt, um einen anpaßbaren radialen Spannungsgradienten in den Körpern zu schaffen, um dadurch gleichzeitig die Doppelbrechung und einen thermischen Linseneffekt in den Körpern (12a, 12b) zu steuern ;

Aufheizen der Körper mit Heizvorrichtungen (14a, 14b), die um die Zylinderfläche der Körper (12a, 12b) angeordnet sind, um einen radialen Temperaturgradienten in den Körpern bereitzustellen ;

Abführen von Wärme mittels Wärmeabfuhr-Vorrichtungen (54, 58), die thermisch mit den Polarflächen der Körper (12a, 12b) gekoppelt sind ;

Begrenzen des Transports von Wärme von dem Körper (12a, 12b) aus Regionen die nicht durch die Wärmeabfuhr-Vorrichtung umschlossen sind mittels Wärmeisoliervorrichtungen (16) ;

Bestimmung der Temperatur der Oberfläche der Körper (12a, 12b) mittels Temperaturerfassungsvorrichtungen (60, 61) ;

Verwenden einer Steuereinrichtung (66, 68, 70, 72, 78 ; 81) zum Zuführen von Energie zu den Heizvorrichtung (14a, 14b) zum Abschalten der Energie für die eine Heizvorrichtung (14a oder 14b), falls die zugehörige Temperaturerfassungsvorrichtung (60) anzeigt, daß eine vorbestimmte Oberflächentemperatur erreicht ist, und Einschalten der Energie für die andere Heizvorrichtung (14b oder 14a), so daß die Körper abwechselnd aufgeheizt werden.

## Revendications

1. Appareil pour compenser l'effet de lentille thermique positive et l'effet de biréfringence thermique d'un laser à solide comportant :

au moins deux corps cylindriques (12a, 12b) alignés optiquement, ayant chacun des première et seconde surfaces polaires ;

lesdits corps (12a, 12b) étant constitués d'une matière optique ayant un indice de réfraction dépendant de la température et un coefficient de dilatation prédéterminé afin que ladite matière se dilate lorsque la température de ladite matière s'élève pour engendrer un gradient de contrainte radiale réglable dans ledit corps pour maîtriser ainsi simultanément les effets de la biréfringence et les effets de lentille thermique dans lesdits corps (12a, 12b) ;

des moyens chauffants (14a, 14b) autour de la surface du cylindre desdits corps (12a, 12b), destinés à produire un gradient radial de température dans lesdits corps ;

des moyens (54, 58) d'élimination de la chaleur couplés thermiquement auxdites surfaces polaires desdits corps (12a, 12b) ;

des moyens (16) d'isolation thermique destinés à limiter le transport de la chaleur provenant desdits corps (12a, 12b) à partir d'autres zones que celles enfermées par lesdits moyens (54, 58) d'élimination de la chaleur,

des moyens (60, 61) de captage de température destinés à déterminer la température de la surface desdits corps (12a, 12b),

des moyens de déclenchement (66, 68, 70, 72, 78 ; 81) destinés à fournir de l'énergie aux moyens chauffants (14a, 14b), pour couper l'alimentation en énergie d'un premier moyen chauffant (14a ou 14b) si le moyen associé (60) de captage de température indique qu'une température de surface prédéterminée est atteinte, et pour température de surface prédéterminée est atteinte, et pour alimenter en énergie un autre des moyens chauffants (14b ou 14a) afin que lesdits corps soient échauffés de façon alternée.

2. Appareil selon la revendication 1, dans lequel deux corps cylindriques alignés optiquement (12a, 12b) sont prévus.

3. Appareil selon la revendication 1 ou 2, dans lequel lesdits moyens chauffants (14a, 14b) comprennent une bobine de fil métallique enroulé autour de la surface extérieure de chacun desdits corps cylindriques (12a, 12b) en matière optique, ledit fil transmettant de la chaleur à chacun desdits corps (12a, 12b) lorsque de l'énergie électrique est appliquée à ladite bobine.

4. Appareil selon les revendications 1 ou 2, dans lequel lesdits moyens chauffants (14a, 14b) comprennent un manchon en matière électriquement conductrice placé en communication avec chacun desdits corps (12a, 12b) en matière optique.

5. Appareil selon la revendication 1 ou 2, dans lequel lesdits moyens chauffants (14a, 14b) et lesdits moyens (54, 58) d'élimination de la chaleur comprennent une matière à effet Peltier placée autour de la surface extérieure de chacun desdits corps (12a, 12b) en matière optique, et dans lequel ladite matière à effet Peltier fait varier la température de chacun desdits corps (12a, 12b) en matière optique lorsqu'on fait passer un courant électrique à travers ladite matière à effet Peltier.

6. Appareil selon au moins d'une des revendications précédentes, dans lequel ladite matière optique est choisie dans le groupe constitué du verre, d'une matière plastique et d'un cristal.

7. Appareil selon la revendication 1 ou 2, dans lequel lesdits moyens (54, 58) d'élimination de la chaleur comprennent :

au moins un élément sensiblement annulaire (54, 58) de dissipation de la chaleur composé d'une matière qui est bonne conductrice de la chaleur ; et

dans lequel au moins l'un desdits éléments est couplé à au moins l'une desdites surfaces polaires de chacun desdits corps (12a, 12b) en matière optique.

8. Appareil selon la revendication 7, dans lequel ledit élément sensiblement annulaire (58) de dissipation de la chaleur est réalisé en oxyde d'aluminium.

9. Appareil selon la revendication 1 ou 2, dans lequel lesdits moyens (54, 58) d'élimination de la chaleur comprennent :

deux couches intérieures, sensiblement cylindriques (58) de dissipation de la chaleur composées d'oxyde d'aluminium ;

dans lequel chacune desdites couches intérieures présente une surface circonférentielle extérieure ;

deux couches extérieures, globalement cylindriques (54) de dissipation de la chaleur composées d'aluminium ;

dans lequel chacune desdites couches intérieures renferme sensiblement les deux surfaces polaires de chacun desdits corps (12a, 12b) en matière optique ; et

dans lequel chacune desdites couches extérieures est couplée à ladite surface circonférentielle de l'une desdites couches intérieures.

10. Appareil selon la revendication 1 ou 2, dans lequel lesdits moyens de captage de température comprennent :

plusieurs thermo-couples (60, 61) ;

dans lequel chaque corps individuel (12a, 12b) en matière optique est couplé à au moins l'un desdits thermo-couples (60, 61), généralement à la surface extérieure dudit corps en matière optique.

11. Appareil selon la revendication 1 ou 2, dans lequel lesdits moyens de déclenchement (66, 68, 70, 72, 78) comprennent :

des premier et second moyens comparateurs (66, 68), chaque moyen comparateur étant couplé à l'un desdits moyens (60, 61) de captage de température et aux moyens (14a, 14b) d'échange de chaleur qui sont couplés à l'un desdits corps (12a, 12b) en matière optique,

dans lequel chaque moyen comparateur (66, 68) compare une valeur de température de référence à un signal d'entrée reçu de son moyen respectif de captage de température auquel il est couplé,

dans lequel lesdits premier et second moyens comparateurs (66, 68) sont couplés par des moyens de liaison (78) afin qu'ils mettent alternativement et séquentiellement en marche leurs moyens respectifs (14a, 14b) d'échange de chaleur,

et dans lequel chaque moyen comparateur (66, 68) arrête son moyen respectif d'échange de chaleur lorsque la température de son moyen respectif (60) de captage de température est égale à ladite température de référence.

12. Appareil selon la revendication 1 ou 2, dans lequel lesdits moyens de déclenchement (66, 68, 70, 72, 78) comprennent un circuit intégré destiné à coordonner et commander le fonctionnement séquentiel dudit appareil de compensation d'effets de lentille variable et de biréfringence à fonctionnement en continu.

13. Procédé pour compenser l'effet de lentille thermique positive et l'effet de biréfringence thermique d'un laser à solide comprenant les étapes qui consistent :

à placer dans le rayonnement du laser au moins deux corps cylindriques (12a, 12b) alignés optiquement, ayant chacun des première et seconde surfaces polaires ;

lesdits corps (12a, 12b) étant constitués d'une matière optique ayant un indice de réfraction dépendant de la température et un coefficient de dilatation prédéterminé afin que ladite matière se dilate lorsque la température de ladite matière s'élève pour engendrer un gradient de contrainte radiale réglable à l'intérieur dudit corps pour maîtriser ainsi simultanément les effets de biréfringence et les effets de lentille thermique dans lesdits corps (12a, 12b) ;

à chauffer lesdits corps par des moyens chauffants (14a, 14b) placés autour de la surface cylindrique desdits corps (12a, 12b) pour produire un gradient radial de température dans lesdits corps ;

à éliminer de la chaleur par des moyens (54, 58) d'élimination de chaleur couplés thermiquement auxdites surfaces polaires desdits corps (12a, 12b) ;

à limiter le transport de la chaleur depuis lesdits corps (12a, 12b) à partir de régions autres que celles enfermées par lesdits moyens (54, 58) d'élimination de la chaleur à l'aide de moyens (16) d'isolation thermique ;

à déterminer la température de la surface desdits corps (12a, 12b) par des moyens (60, 61) de captage de température ;

à utiliser des moyens de déclenchement (66, 68, 70, 72, 78 ; 81) pour alimenter en énergie les moyens chauffants (14a, 14b), afin de couper l'alimentation en énergie de l'un des moyens chauffants (14a ou 14b) si le moyen associé (60) de captage de température indique qu'une température de surface prédéterminée est atteinte, et pour alimenter en énergie un autre des moyens chauffants (14b ou 14a) afin que lesdits corps soient échauffés de façon alternée.

Fig. 1.

10

2.

18

16

14

12

2.

Fig. 2.

10

18

16

14

20

12

Fig.3a

Fig. 3b.

Fig.3c.  Fig.3d.  Fig.3e  Fig.3f.  Fig.3g.

Fig. 4.

Fig.5.

BIREFRINGENCE
COMPENSATION

38

EXTINCTION RATIO (dB)

INPUT POWER TO (WATTS)
DYNAMIC LENS

WITHOUT DYNAMIC LENS

40

BEAM DIVERGENCE

WITH DYNAMIC LENS

42

90% ENERGY CONE ANGLE (m.f.)

PULSE RATE FREQUENCY (p.p.s.)

Fig. 10

Fig. 6.

Fig. 7

Fig. 8

# Fig.9.